# EUROPÄISCHE PATENTSCHRIFT

(11) **EP 0 929 987 B1**
(45) Veröffentlichungstag und Bekanntmachung des Hinweises auf die Patenterteilung: **08.08.2007**
(21) Anmeldenummer: 97910238.1
(22) Anmeldetag: 30.09.1997
(51) Int. Cl.: H04Q 11/04

(54) **ECHTZEIT-RUFANZEIGE FÜR EINEN VERMITTLUNGSRECHNER**
REAL TIME CALL DISPLAY FOR A SWITCHING COMPUTER
AFFICHEUR D'APPEL EN TEMPS REEL POUR UN PROCESSEUR DE COMMUTATION

(30) Priorität: 30.09.1996 DE 19640230
(43) Veröffentlichungstag der Anmeldung: 21.07.1999
(73) Patentinhaber: SIEMENS AKTIENGESELLSCHAFT, 80333 München (DE)
(72) Erfinder: DÜNSSER, Elmar, D-86854 Amberg (DE); GÜNTHER, Wolfgang, D-81479 München (DE)
(86) Internationale Anmeldenummer: PCT/DE1997/002247
(87) Internationale Veröffentlichungsnummer: WO 1998/015156

(56) Entgegenhaltungen:
- GB-A- 2 253 542
- US-A- 5 003 595
- ECKHARDT B ET AL: "PASST: POSITION ACCESS SWITCHING SYSTEM FOR TELEPHONY NETWORKS" PHILIPS TELECOMMUNICATION REVIEW, Bd. 47, Nr. 4, 1.Dezember 1989, Seiten 14-31, XP000094892
- SILVERSON R B ET AL: "AXE10: ARCHITECTURE" BRITISH TELECOMMUNICATIONS ENGINEERING, Bd. 8, Nr. PART 03, 1.Oktober 1989, Seiten 156-159, XP000073440

## Beschreibung

Der Anmeldungsgegenstand betrifft ein Überwachungssystem mit den Merkmalen des Oberbegriffs des Anspruchs 1.

Aus der GB 2253542 A ist ein Überwachungssystem bekannt, das die im Oberbegriff des Anspruchs 1 genannten Merkmale aufweist.

Für Datenverarbeitungseinrichtungen gibt es zur Analyse der einzelnen internen Abläufe bei Ausführung eines Ablaufprogramms Protokolliereinrichtungen, die in Fachkreisen auch als Tracer bezeichnet werden. Für Vermittlungsrechner gibt es spezielle Rufverfolger, die in Fachkreisen auch als Call Tracer bezeichnet werden. Die Protokolliereinrichtungen zeichnen die während eines Testlaufs auf der dem Ablaufprogramm der Datenverarbeitungseinrichtung abgewandten Seite des Betriebsssystems erhaltenen Daten auf. Nach dem Testlauf stehen die Daten für eine nachträgliche Auswertung zur Verfügung.

Hierbei kann es vorkommen, daß die tatsächlichen internen Abläufe nicht mehr eindeutig nachvollziehbar sind, weil sie möglicherweise auf ihrem Weg über das Betriebssystem verschleiert worden sind; ein scheinbarer Fehler des Ablaufprogramms kann tatsächlich durch einen Fehler des Betriebssystems verursacht worden sein. Eine nahezu gleichzeitige Mitverfolgbarkeit ist nicht gegeben.

Dem Anmeldungsgegenstand liegt das Problem zugrunde, ein System zur Überwachung der einzelnen internen Abläufe einer Datenverarbeitungseinrichtung zu schaffen, bei dem eine Verfolgung in Echtzeit gegeben ist.

Das Problem wird bei einem Gegenstand mit den Merkmalen des Oberbegriffs des Anspruchs 1 durch die Merkmale des kennzeichnenden Teils des Anspruchs 1 gelöst.

Das anmeldungsgemäße Überwachungssystem bringt eine Darstellung der internen Abläufe in einer Datenverarbeitungseinrichtung, insbesondere einem ISDN (Integrated Services Digital Network)-Vermittlungsrechner oder einem B-ISDN (Broadband-Integrated Services Digital Network)-Vermittlungsrechner, in Echtzeit mit sich, wobei eine Fehlerdarstellung, die durch das Betriebssystem der Datenverarbeitungseinrichtung verursacht ist, vermieden ist. Das anmeldungsgemäße Überwachungssystem ist frei von Interrupts für das Ablaufprogramm und damit weitgehend rückwirkungsfrei.

Weitere vorteilhafte Ausgestaltungen des Anmeldungsgegenstandes betreffen die Darstellung der internen Abläufe als alphanumerische Ausdrücke vorzugsweise für Testzwecke und die Darstellung der internen Abläufe als graphische Elemente vorzugsweise für Vorführungen.

Der Anmeldungsgegenstand wird im Folgenden als Ausführungsbeispiel in einem zum Verständnis erforderlichen Umfang anhand von Figuren näher erläutert. Dabei zeigen:
- Figur 1: eine prinzipielle Darstellung einer mit einer Vermittlungseinrichtung und einem Personalcomputer gebildeten Anordnung, in der das anmeldungsgemäße Überwachungssystem realisiert ist,
- Figur 2: eine prinzipielle Darstellung näherer Einzelheiten des Überwachungssystems,
- Figur 3: eine Bildschirmanzeige einzelner interner Abläufe durch alphanumerische Zeichen,

- Figur 4: eine Bildschirmanzeige mit einer Darstellung des überwachten Rechners und der an ihn angeschlossenen peripheren Einrichtungen als graphische Elemente.

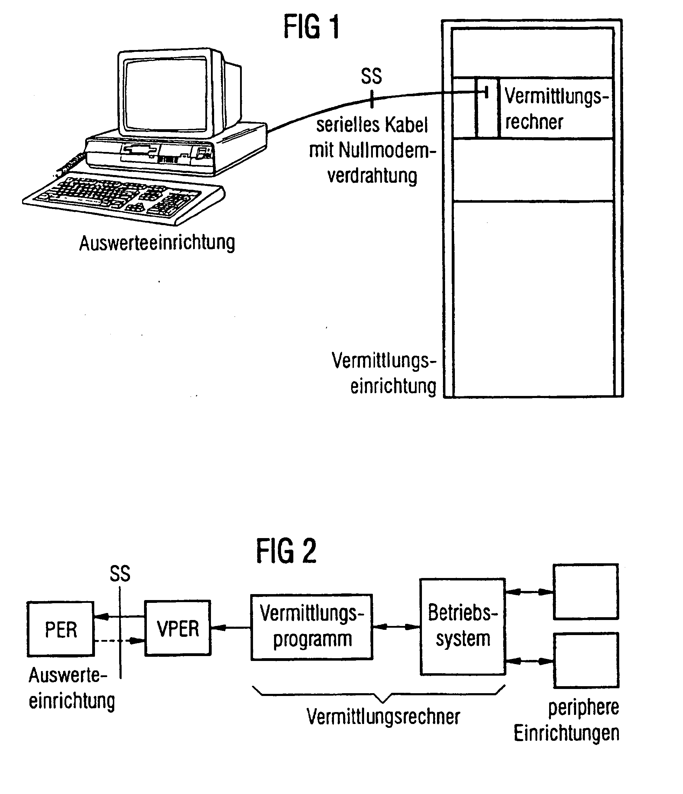

Figur 1 zeigt eine Vermittlungseinrichtung, die mit nicht näher dargestellten peripheren Einrichtungen in Verbindung steht. Die Vermittlungseinrichtung vermag nach Maßgabe von Anforderungen, die von den peripheren Einrichtungen abgegeben sind, Nachrichtenzellen fester Länge im Zuge von bidirektionalen, virtuellen Verbindungen nach einem asynchronen Übertragungsverfahren, insbesondere dem ATM(Asynchronous Transfer Mode)- Verfahren, zwischen den peripheren Einrichtungen weiterzuleiten. Die peripheren Einrichtungen mögen durch multimediafähige Einrichtungen gegeben sein, deren abgegebene bzw. zugeführte Datenrate beispielsweise 30 Mbit/s beträgt. Die Vermittlungseinrichtung weist einen Vermittlungsrechner auf, der den Aufbau bzw. das Auslösen der virtuellen Verbindungen bewirkt. Der Vermittlungsrechner weist eine serielle Schnittstelle SS auf, die mit einer seriellen Schnittstelle eines handelsüblichen Personalcomputers verbunden ist. Der Personalcomputer, der als Auswerteeinrichtung dient, weist bekanntlich unter anderem einen Festplattenspeicher zur dauerhaften Abspeicherung von Daten, einen Arbeitsspeicher zur vorübergehenden Abspeicherung von Daten, eine Verarbeitungseinheit (Prozessor) zur Verarbeitung von Daten, eine Tastatur zur Eingabe von Daten und einen Monitor als Bildschirmanzeige auf.

Der Vermittlungsrechner der Vermittlungseinrichtung ist durch ein Ablaufprogramm, das durch das in Fig 2 dargestellte Vermittlungsprogrammm gegeben ist, gesteuert. Das Vermittlungsprogramm behandelt mittels Austausch von Meldungen interne Abläufe, wie z. B. die Behandlung ankommender und abgehender Signalisierungsnachrichten sowie anderer Ereignisse.

Herkömmliche Rechner treten ausschließlich über das Betriebssystem mit der Schaltungsumgebung, die in Fachkreisen auch als Hardware bezeichnet wird, in Verbindung. Der vorliegnde Vermittlungsrechner tritt über das Betriebssystem mit den peripheren Einrichtungen in Verbindung. Anmeldungsgemäß ist das Vermittlungsprogramm um ein Programmodul VPER ergänzt. Das Programmodul VPER nimmt die vom Vermittlungsprogramm kommenden Aufrufe, die über die internen Abläufe informieren, entgegen und leitet sie - ohne über das Betriebssystem zu gehen - an die serielle Hardware-Schnittstelle SS weiter. Das Programmodul VPER arbeitet ohne die Verwendung von Interrupts, womit die vermittlungstechnischen Vorgänge im Vermittlungsrechner nicht verändert werden. Das Zeitverhalten des Vermittllungsrechners wird durch die Hinzufügung des Programmoduls VPER zu dem Vermittlungsprogramm nur unwesentlich verschlechtert. Das Programmodul VPER erfaßt also die einzelnen internen Abläufe des Vermittlungsprogramms und leitet sie betreffende Informationen in Kurzform an die Schnittstelle SS weiter.

Die mit dem Personalcomputer gebildete Auswerteeinrichtung weist ein Programm PER zur Echtzeit-Rufanzeige auf, das über die Schnittstelle SS mit dem Programmodul VPER in Verbindung steht. Das Programm PER nutzt die Möglichkeiten der Interrupt-Steuerung, um gleichzeitig die von VPER ungebremst gesendeten Informationen entgegenzunehmen, mit einem Zeitstempel zu versehen und im Arbeitsspeicher zu puffern. Das Programm PER nimmt eine logische Bewertung der von dem Programmodul VPER gesendeten Informationen vor und ermittelt damit die entsprechenden in der Vermittlungseinrichtung ablaufenden Vorgänge. Das Programm PER schließt aus den für einen bestimmten vermittlungsrechnischen Vorgang, wie z. B. dem Aufbau einer Verbindung, charakteristischen internen Abläufen auf den vermittlungsrechnischen Vorgang selbst.

VPER bildet also das Bindeglied zwischen den von dem Vermittlungsprogramm kommenden Aufrufen, die über dort ankommende und abgehende Signalisierungsnachrichten und andere Ereignisse informieren, und der externen Echtzeit-Rufanzeige.

Über das in der Auswerteeinrichtung aktivierte Programm PER zur Echtzeit-Rufanzeige ist das Programmodul VPER mittels einer Eingabe über die Tastatur der Auswerteeinrichtung fernaktivierbar.

Das Programmodul VPER nimmt von der Auswerteeinrichtung Kommandos zur synchronen Umschaltung der Baudrate (von 9600 bis 115200 Baud) und zur Auswahl der gewünschten Filterfunktion entgegen, um die Menge der zur Echtzeit-Rufanzeige übertragenen Informationen zu beeinflussen (von "keine Information" über Kurzfassungen bis zu kompletten Signalisierungsnachrichten).

Das Programm PER erlaubt eine dauerhafte Abspeicherung der für einen Testlauf von dem Programmodul VPER erhaltenen Daten auf der Festplatte der Auswerteeinrichtung in einer Log-Datei. Die abgespeicherten Daten eines Testlaufs stehen für eine nachträgliche Auswertung zur Verfügung.

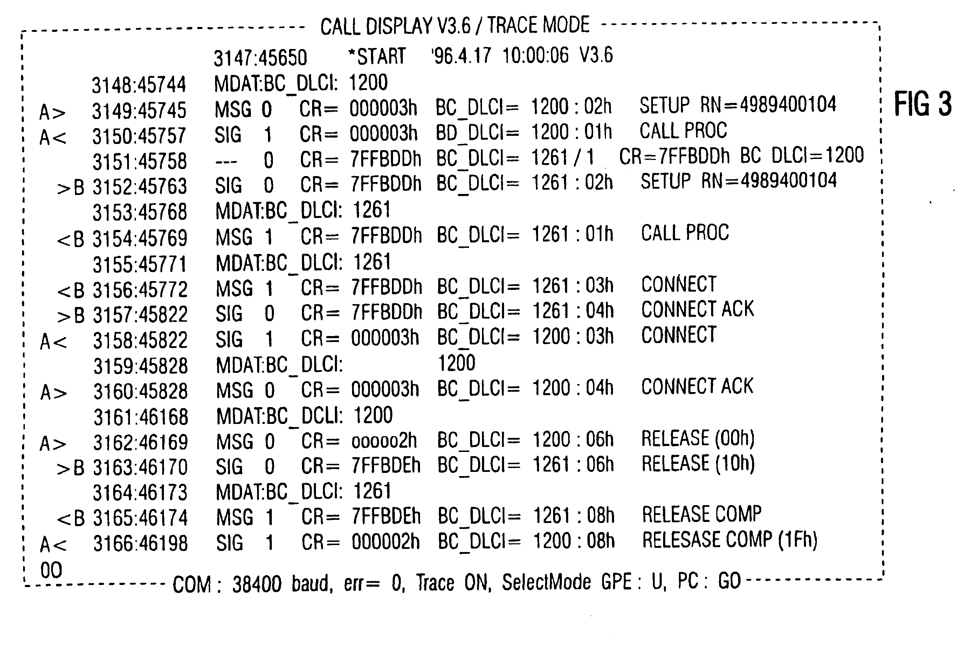

In einem sogenannten Testmodus wird eine von dem Programmodul VPER gesendete Information als ein den betreffenden internen Ablauf explizit bezeichnenden Ausdruck in Form alphanumerischer Zeichen dargestellt. Fig 3 zeigt eine Bildschrmdarstellung, in der eine mögliche Folge von internen Abläufen zeilenweise als alphanumerische Ausdrücke dargestellt sind. Speziell zeigt die Bildschirmausgabe eine Nachrichtensequenz (Nachrichten in Kurzform), die zum Aufbau und sofort darauf folgenden Abbau eines Rufes zwischen zwei peripheren Einrichtungen und der lokalen Vermittlungseinrichtung ausgetauscht wurde. Die Bildschirmanzeige mittels alphanumerischer Zeichen im Testmodus gibt dem fachkundigen Techniker eine nahezu verzögerungsfreie Anzeige über die aktuellen internen Abläufe in der Vermittlungseinrichtung.

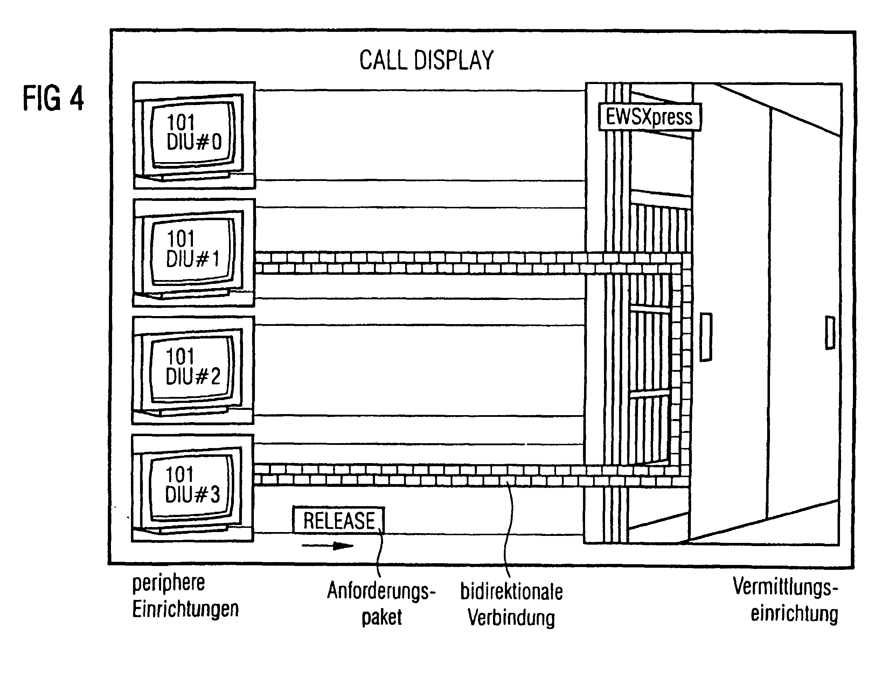

Fig 4 zeigt die Bildschirmanzeige der Auswerteeinrichtung in einem sogenannten Vorführmodus, wobei die Vermittlungseinrichtung und die mit ihr verbundenen peripheren Einrichtungen als graphische Elemente dargestellt sind. Dabei werden die von dem Programmodul VPER gesendeten Informationen als animiertes Element zwischen den graphischen Elementen dargestellt. So wird beispielsweise eine aufgebaute bidirektionale Verbindung zwischen der peripheren Einrichtung 102 und 104 als eine über die Vermittlungseinrichtung geführte Linie dargestellt, wobei sich zur verbesserten Anschaulichkeit auf der Linie kleine Rerchtecke, die Nachrichtenzellen repräsentieren, in beiden Übertragungsrichtungen bewegen. Ein von einer peripheren Einrichtung an die Vermittlungseinrichtung abgegebene Anforderung zur Auslösung einer Verbindung wird als ein mit 'Release' bezeichnetes Paket dargestellt, das von der peripheren Einrichtung 104 zur Vermittlungseinrichtung verschoben wird. Die Geschwindigkeit der Veränderung des Inhalts der Bildschirmdarstellung, insbesondere die Bewegungsgeschwindigkeit von graphischen Elementen, ist auf die Auffassungsgeschwindigkeit des Betrachters verlangsamt. Im Vorführmodus ist eine Bildschirmdarstellung der internen Abläufe des Vermittlungsrechners hoher Anschaulichkeit auch für einen nicht fachkundigen Betrachter gegeben. Der Vorführmodus ist für das augenfällige Testen eines neuen vermittlungsprogramms, aber auch für Präsentationen vor einem breiten Publikum auf Messen und Ausstellungen geeignet.

Der Anmeldungsgegenstand wurde am Beispiel eines Vermittlungsrechners einer Vermittlungseinrichtung beschrieben; der Anmeldungsgegenstand ist ohne weiteres auf Datenverarbeitungseinrichtungen, die einen gleichartigen Aufbau aufweisen, anwendbar und bezieht sich uneingeschränkt auf diese Datenverarbeitungseinrichtungen.

## Patentansprüche

1. Überwachungssystem für eine Datenverarbeitungseinrichtung, insbesondere einen Vermittlungsrechner, zur visuellen Darstellung der internen Abläufe, bei dem
- die Datenverarbeitungseinrichtung ein Ablaufprogramm aufweist,
- das Ablaufprogramm über ein Betriebssystem mit peripheren Einrichtungen der Datenverarbeitungseinrichtung in Verbindung tritt,
- die Datenverarbeitungseinrichtung über eine Schnittstelle (SS) mit einer Auswerteeinrichtung verbunden ist, derart, daß von der Datenverarbeitungseinrichtung die internen Abläufe des Ablaufprogramms betreffende Informationen über die Schnittstelle (SS) zu der Auswerteeinrichtung übertragen, ausgewertet und auf einer Bildschirmanzeige dargestellt werden,
**dadurch gekennzeichnet,**
- **dass** die Datenverarbeitungseinrichtung mit dem Ablaufprogramm um ein Programmmodul (VPER) ergänzt ist, das Informationen über die internen Abläufe des Ablaufprogramms unmittelbar an die Schnittstelle (SS) weiterleitet.

2. Überwachungssystem nach Anspruch 1,
**dadurch gekennzeichnet,**
**dass** das Programmodul (VPER) den internen Abläufen jeweilige Informationen in Kurzform zuordnet.

3. Überwachungssystem nach Anspruch 1 oder 2,
**dadurch gekennzeichnet,**
**dass** die Auswerteeinrichtung durch einen Personalcomputer gegeben ist und die Darstellung auf dem Monitor des Personalcomputes erfolgt.

4. Überwachungssystem nach einem der vorstehenden Ansprüche
**dadurch gekennzeichnet,**
**dass** die Informationen in der Auswerteeinrichtung mit Zeitstempeln versehend und abgespeichert werden.

5. Überwachungssystem nach einem der vorstehenden Ansprüche
**dadurch gekennzeichnet**,
ein interner Ablauf als ein den internen Ablauf explizit bezeichnenden Ausdruck in Form alphanumerischer Zeichen dargestellt wird.

6. Überwachungssystem nach Anspruch 5
**dadurch gekennzeichnet,**
**dass** unterschiedliche Arten von internen Abläufen durch alphanumerische Zeichen unterschiedlicher Farbe dargestellt werden.

7. Überwachungssystem nach einem der Ansprüche 1 bis 4
**dadurch gekennzeichnet,**
**dass** auf der Bildschirmanzeige der Datenverarbeitungseinrichtung und periphere Einrichtungen als grafische Elemente dargestellt sind und ein interner Ablauf als animiertes Element zwischen den grafischen Elementen dargestellt ist.

8. Überwachungssystem nach einem der vorstehenden Ansprüche
**dadurch gekennzeichnet,**
**dass** die Datenverarbeitungseinrichtung durch einen Vermittlungsrechner und das Ablaufprogramm durch ein vermittlungstechnisches Programm gegeben sind.

## Claims

1. Monitoring system for a data processing installation, in particular a switching computer, for visually displaying the internal sequences, with which
- the data processing installation comprises an executable program,
- the executable program is in contact with peripheral devices of the data processing installation via an operating system
- the data processing installation is connected to an evaluation device via an interface (SS), such that the information relevant to the internal sequences of the executable program is transmitted by the data processing installation to the evaluation device via the interface (SS), evaluated and displayed on a display screen,
**characterised in that**
- the data processing installation with the executable program is supplemented with a program module (VPER), which directly forwards information relating to the internal sequences of the executable program to the interface (SS).

2. Monitoring system according to claim 1,
**characterised in that**
the program module (VPER) assigns summarized information to the internal sequences in each instance.

3. Monitoring system according to claim 1 or 2,
**characterised in that**
the evaluation device is provided by a personal computer and the information is displayed on the monitor of the personal computer.

4. Monitoring system according to one of the preceding claims,
**characterised in that**
the information in the evaluation device is provided with a time stamp and stored.

5. Monitoring system according to one of the preceding claims,
**characterised in that**
an internal sequence is displayed as an expression in the form of alphanumeric characters which explicitly designates the internal sequence.

6. Monitoring system according to claim 5,
**characterised in that**
different types of internal sequences are displayed by alphanumeric characters of different colours.

7. Monitoring system according to one of claims 1 to 4,
**characterised in that**
[lacuna] are displayed on the display screen of the data processing installation and peripheral devices as graphical elements and an internal sequence is displayed as an animated element between the graphical elements.

8. Monitoring system according to one of the preceding claims,
**characterised in that**
the data processing installation is provided by a switching computer and the executable program is provided by a call processing program.

## Revendications

1. Système de surveillance pour un dispositif de traitement de données, notamment un processeur de commutation, destiné à la représentation visuelle des processus internes, dans lequel
- le dispositif de traitement de données comprend un programme d'exécution,
- le programme d'exécution, via un système d'exploitation, entre en communication avec des dispositifs périphériques du dispositif de traitement de données,
- le dispositif de traitement de données, via une interface (SS), est connecté à un dispositif d'évaluation de sorte que des informations concernant les processus internes du programme d'exécution sont transmises par le dispositif de traitement de données via l'interface (SS) vers le dispositif d'évaluation, évaluées et représentées sur un affichage d'écran,
**caractérisé en ce que**
- le dispositif de traitement de données comprenant le programme d'exécution est complété par un module de programme (VPER) lequel retransmet des informations sur les processus internes du programme d'exécution directement à l'interface (SS).

2. Système de surveillance selon la revendication 1,
**caractérisé en ce que**
le module de programme (VPER) associe aux processus internes des informations respectives sous forme abrégée.

3. Système de surveillance selon la revendication 1 ou 2,
**caractérisé en ce que**
le dispositif d'évaluation se présente sous la forme d'un ordinateur personnel et la représentation se fait sur le moniteur de l'ordinateur personnel.

4. Système de surveillance selon l'une des revendications précédentes,
**caractérisé en ce que**
les informations dans l'unité d'évaluation sont munies d'un horodatage et enregistrées.

5. Système de surveillance selon l'une des revendications précédentes,
**caractérisé en ce que**
un processus interne est représenté comme une expression désignant explicitement le processus interne, sous forme de caractères alphanumériques.

6. Système de surveillance selon la revendication 5,
**caractérisé en ce que**
différentes sortes de processus internes sont représentées par des caractères alphanumériques de couleur différente.

7. Système de surveillance selon l'une des revendications 1 à 4,
**caractérisé en ce que**
sur l'affichage d'écran du dispositif de traitement de données, les dispositifs périphériques sont représentés comme éléments graphiques et un processus interne est représenté comme élément animé entre les éléments graphiques.

8. Système de surveillance selon l'une des revendications précédentes,
**caractérisé en ce que**
le dispositif de traitement de données se présente sous la forme d'un processeur de commutation et le programme d'exécution sous la forme d'un programme de commutation.
